# EUROPEAN PATENT APPLICATION

(11) **EP 3 695 695 A1**
(43) Date of publication of application: **19.08.2020**
(21) Application number: 20156036.4
(22) Date of filing: 07.02.2020
(51) Int. Cl.: A01B 79/00, A01F 15/08

(54) **HAY ANALYSIS SYSTEM ASSOCIATED WITH A BALER**

(30) Priority: 14.02.2019 IT 201900002187
(71) Applicant: DINAMICA GENERALE S.p.A, 46025 Poggio Rusco (IT)
(72) Inventor: BARBI, Alberto, 46025 Poggio Rusco (IT); BERTOLANI, Nicola, 46020 Carbonara di Po Mantova (IT)
(74) Representative: Casadei, Giovanni

(57) **Abstract**

An analysing device for reaped and harvested plants in a heap or swath (C), comprising: a containment shell (2), provided with a tapered conformation from a rear portion (22) towards a front portion (21) that faces an advancement direction (A) with respect to a swath (C); an analysis window (4), fashioned through a wall of the shell (2); one or more analysing sensors (5), placed inside the shell (2) in a position such as to face towards the analysis window (4), for sensing the environment outside the shell (2) through the window (4) itself.

## Description

The present invention relates to an analysing device for reaped and harvested plants in a heap or swath.

Historically, the determination of the level of dry matter in hay gathered in fields by different types of balers has been a very important subject. The correct level of dry matter represents, in fact, the transition value between two opposing needs:
i) a low dry matter content minimises the risk of the loss of leaves, i.e. of the part of plants with the most protein (alfalfa hay, for example), but in the short term it entails a certain risk of fire as a result of the increase in the internal temperature of the bale due to fermentation;
(ii) a high dry matter content entails the risk of the loss of numerous leaves as a result of the fragility of very dry plants, leading to a major loss in the value of the harvested hay.

The need to determine the correct level of dry matter during harvest has increased over time with the introduction of a new generation of balers, which are capable of forming high-density bales of larger and larger size, which thus contain increasing amounts of material.

Portable instruments capable of measuring the dry matter in samples collected in different points of the field in order to establish the most advantageous time for harvesting exist on the market.

There also exist devices designed to measure the dry matter of bales which are mounted directly on high-density balers. In particular, there are devices on the market based on two different technologies. In both cases, an estimate of dry matter is obtained thanks to a regression that makes use of parameters calculated beforehand during the calibration of the device.

One of the available technologies provides for the measurement of electric parameters of the bales, such as, for example, resistive or capacitive values.

Another of the available technologies provides for the use of ultrasonic meters, whereby a measurement is made of the attenuation of the power of a signal with known power transmitted through a bale.

The devices summarised above are mostly applied in balers known in the art as "large square balers". In such balers the sensors are mounted in the rear part of the baler, where the unloading chute is. This is because both technologies use sensors that perform a measurement of a physical quantity able to pass through the entire bale and which are influenced by the homogeneity of the measured body.

Applications providing for the measurement of hay characteristics by means of sensors based on NIR technology have recently been introduced. Such sensors are mounted in positions that are wholly similar to those of the more traditional electric or ultrasonic sensors.

Sensors based on NIR technology have the large advantage of being able to measure not only dry matter, but also nutritional parameters such as protein, fibre or others, in order to determine not only the dry matter of the hay, but also the protein, fibre (ADF and NDF), ash, etc., which are useful both for a qualitative classification of the harvested hay and for an a posteriori analysis of soil characteristics. Such parameters are of extreme importance in order to be able to implement so-called "precision farming", which requires knowledge of accurate information for the purpose of precisely identifying the characteristics of a single portion of the field in which harvesting takes place and/or of each bale of harvested hay.

The presently available measuring technologies have some drawbacks.

As regards portable instruments, the greatest limit is given by the need to manually collect samples of the hay that might be representative of the hay to be harvested in the field: the larger the size of the field, the greater the number of samples that must necessarily be collected in different points, with a consequent waste of time.

As regards measuring instruments based on electrical parameters and/or ultrasound, the greatest limits are due to the very nature of the sensors used, i.e. the possibility of predicting only dry matter, and the need to calibrate the sensors frequently, depending on the range of dry matter of the particular harvest. Furthermore, the prediction is strongly dependent on the density with which the bale is formed, i.e. the intra-bale density variation (inside the same bale) and/or inter-bale density variation (between different bales) leads to major prediction errors. Last but not least, the dosing of the amount of preservative liquids (used increasingly often to best maintain the hay until the time of use thereof) depends on the level of dry matter in the hay itself, and with the sensors positioned on the unloading chute, dosing can only take place on a historical basis.

As regards measuring instruments based on NIR technology, they have the undoubted advantage of being able to simultaneously measure various parameters in addition to dry matter. Furthermore, the placement thereof in the rear part of the baler facilitates the method of reading the sample, since it allows the scanning of compact material that exerts high pressure on the window of the analyser. However, in that position there are the following disadvantages.

In the first place, the analyser only scans the outermost part of the bale, since NIR electromagnetic radiation is characterised by a relatively low energy content which is therefore able to penetrate into the bale only for a few tens of millimetres. In the literature, there are studies that report measurements performed on the variability of nutrients inside the bale; the variability, for example, of the protein in a single bale is similar to that measurable among different bales harvested in the same field. It is thus evident that a measurement performed only on the outer surface of a bale is hardly significant in relation to the core of the bale itself.

In this position, the analyser does not permit an immediate use of the analytical data to obtain a real-time field map of the different parameters measured on the harvested hay: dry matter, protein, ... ;

The device described in document US2018332773 seeks to overcome the limits summarised above by providing for the installation of one or more NIR analysers in the front part of the LSB (large square baler), in particular in the hay precompression chamber.

This solution, which partly overcomes the limits summarised above, is not free, however, of other drawbacks.

In fact, the pressure exerted by the hay on the window of the analyser is relatively limited. Furthermore, the spectra acquisition time is extremely short, since the time of the loading/unloading cycle is equal to about 1 second, whilst the time in which the material completely fills the chamber is in the order of a few tenths of a second. A further drawback is given by the fact that the spaces available for mounting a sensor inside the precompression chamber are limited and vary according to the make/model of the baler considered. From this it follows that access to the sensor(s) for maintenance can prove to be rather complex.

The solution in document US2018332773, moreover, is not usable in the presence of balers that use the injection of steam into the precompression chamber and are more and more widely adopted in order to minimise leaf loss in the process of creating bales, since the temperatures reached in the precompression chamber, close to 100°C, are prohibitive for any NIR device.

The object of the present invention is to overcome the limits of the currently available devices and technologies.

Characteristics and advantages of the present invention will more fully emerge from the following detailed description of an embodiment of said invention, as illustrated in a non-limiting example in the accompanying drawings, in which:

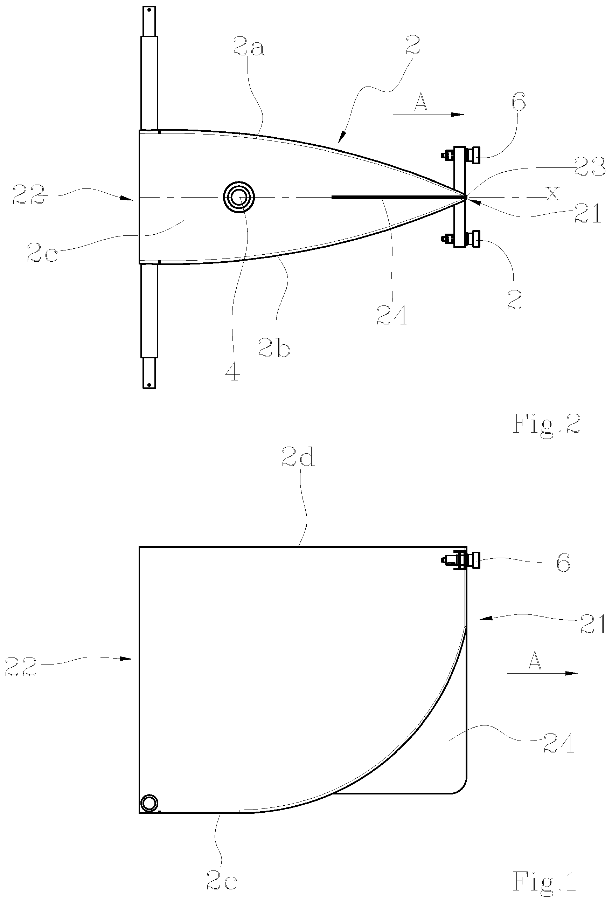

- figure 1 shows a vertical elevation view of the analysing device according to the present invention;
- figure 2 shows a bottom view of the device in figure 1;

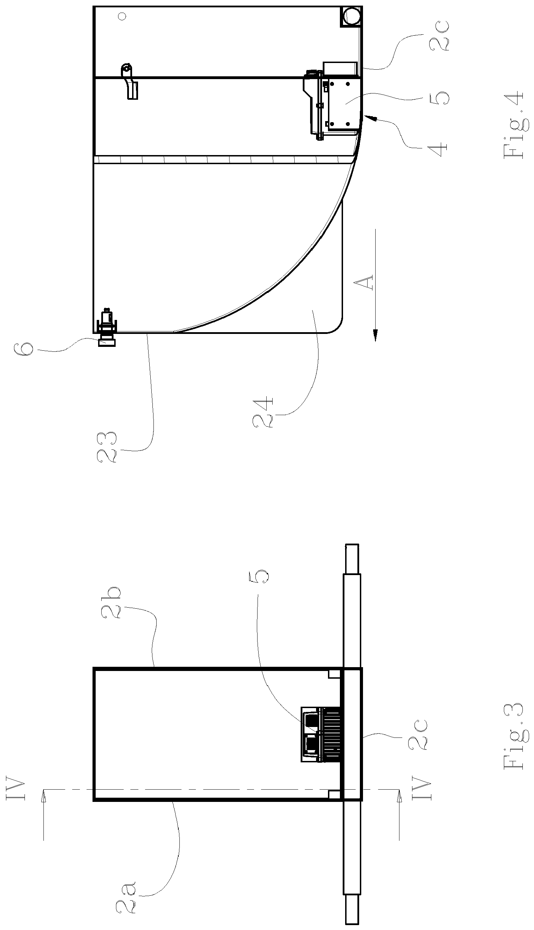

- figure 3 shows a left-side view of the device in figure 1;
- figure 4 shows a sectional view according to the plane IV-IV in figure 3;
- figure 5 shows a schematic view of the analysing device in an operating condition;
- figure 6 shows the analysing device combined with an operating vehicle.

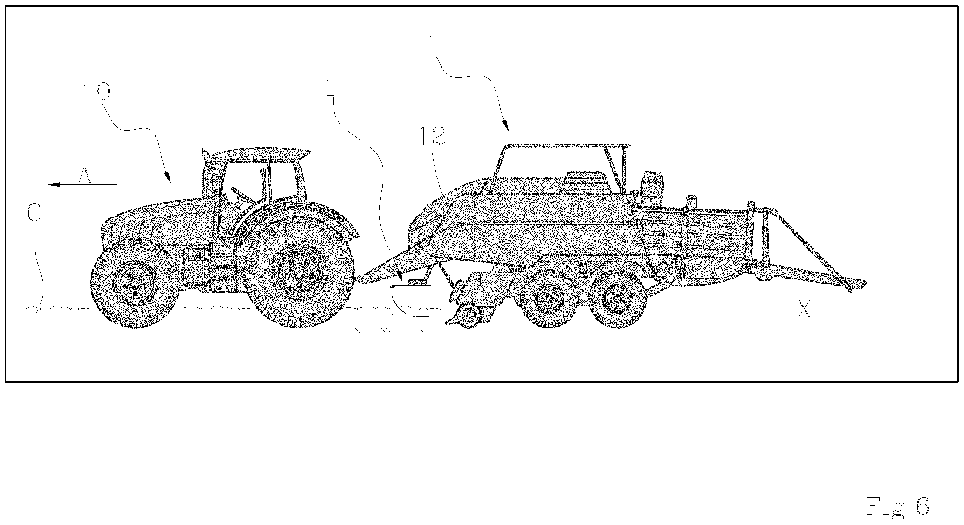

The analysing device (1) according to the present invention is particularly suitable for the analysis of reaped plants, for example hay, harvested in a heap or swath (C). Figure 6 schematically shows a swath (C) and the analysing device (1) placed in a possible operating position for analysing the plants.

The analysing device (1) according to the present invention preferably employs one or more analysing sensors (5) based on NIR technology. As is well known, an NIR sensor makes it possible to simultaneously measure the amount of dry matter and other parameters, such as, for example, protein, ADF, NDF, ash, RFV (relative feed value) and others. It would be possible, however, to use sensors based on a different technology.

Unlike current devices, the analysing device (1) is configured to analyse the harvested plants in a swath (C) dynamically, that is, while moving along the swath (C) in a longitudinal direction (X) of the swath (C) itself, according to an advancement direction (A). The analysis carried out by the analysing device (1) is thus carried out directly in the swath (C), i.e. before the plants are gathered up. The analysing device (1) can be associated with an operating vehicle, as will be better clarified below, so as to be conveyed along the swath (C).

For this purpose the analysing device (1) comprises a containment shell (2) provided with a tapered conformation from a rear portion (22) towards a front portion (21) that faces the advancement direction (A). The analysing sensor (5) is placed inside the shell (2).

The shell (2) has two lateral walls (2a,2b) that converge together from the rear portion (22) towards the front portion (21). The lateral walls (2a,2b) are connected to a substantially flat bottom wall (2c). Advantageously, the shell (2) can be open at the top, in an upper area (2d) opposite the bottom wall (2c), or else it can be closed off with a removable cover, not represented. In both cases, the shell (2) allows easy access to the inside thereof in order to reach the analysing sensor (5) in any case where it is necessary to operate thereupon. Alternatively, or in combination with the possibility of access from the top, the shell (2) could be provided with further access doors, not illustrated.

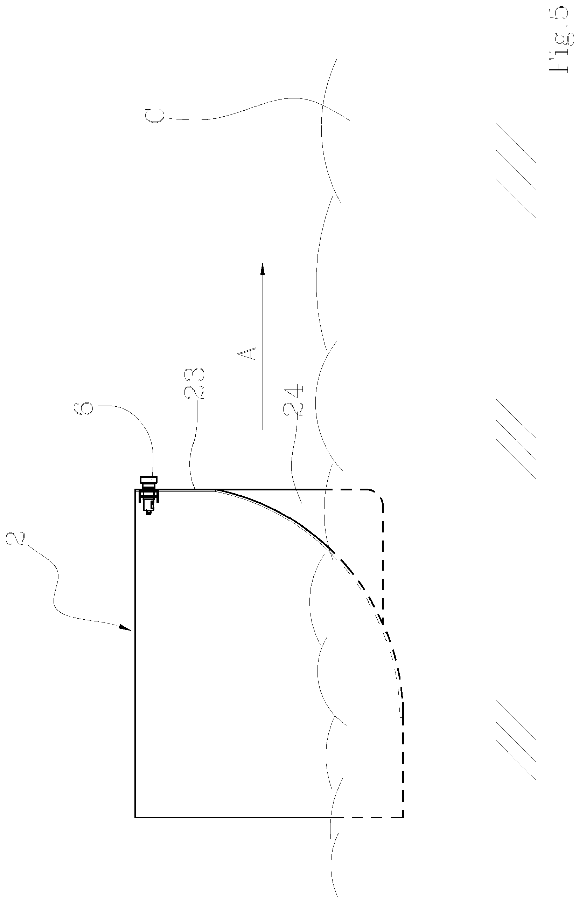

The front portion (21) preferably has an apex (23) facing the advancement direction (A), i.e. the lateral walls (2a,2b) join together to form the apex (23). Thanks to this conformation, the shell (2) is able to advance along the swath (C), separating the plants without causing any accumulation and without excessively modifying the form of the swath (C), as schematically shown in figure 5.

In the embodiment represented, the apex (23) has a curved trend on a vertical plane, with the concavity facing upwards and towards the rear portion (22). Proceeding downwards, the apex (23) connects to the bottom wall (2c). In order to favour the passage thereof along the swath (C), the front portion (21) of the shell (2) is provided with a front tab (24), arranged on a median vertical plane of the shell (2).

An analysis window (4) is fashioned through a wall of the shell (2). The analysing sensor (5) is placed inside the shell (2), in a position such as to face towards the analysis window (4), for sensing the environment outside the shell (2) through the window (4) itself.

In the embodiment represented, the analysis window (4) is located in a lower portion of the shell (2). In particular, the analysis window (4) is fashioned through the bottom wall (2c).

Thanks to the conformation of the shell (2), the analysing sensor (5) is conveyed inside the swath (C), at a given level with respect to the ground, in such a way as to be able to analyse the plants present inside the swath. This possibility is fundamental in order to obtain a measurement that is representative of the harvested hay in the swath (C), since the characteristics of the hay in the upper part of the swath depend on the weather and can be significantly different from the hay in the core of the swath itself. In fact, on sunny days the hay at the top of the swath will be relatively drier, whereas in the event of harvesting in the morning with dew or after a rainfall, there will be decidedly less dry matter present at the top.

The analysis of the swath (C) thus takes place by positioning the analysing device at least partially inside the swath (C), at a preestablished level with respect to the ground, so that the analysis window (4) is inside the swath (C). The analysing device (1) is then conveyed along the swath (C) following the longitudinal direction (X) in an advancement direction (A).

The height or level of the shell (2), and thus of the analysing sensor (5), with respect to the ground is adjustable. This enables information to be acquired at different heights of the swath (C).

For this purpose, the analysing device (1) according to the invention comprises an attachment means, structured so as to allow the shell (2) to be attached to the chassis of an operating vehicle. This attachment means is provided to allow a movement of the shell (2) along a vertical direction and/or a rotation of the shell (2) about a horizontal axis and/or a movement of the shell (2) along a horizontal axis.

In other words, the attachment means is structured so as to allow the shell (2) one or more of the following movements with respect to the chassis of the operating vehicle: along a horizontal axis, parallel to the longitudinal direction (X); along a vertical direction, to allow a level variation with respect to the ground; and in rotation about a horizontal axis, to vary the orientation or inclination of the window (4) and of the analysing sensor (5) with respect to the ground.

Attachment means endowed with the features listed above are available to the person skilled in the art in various embodiments, all well known in the art, and they will thus not be described in further detail.

The device (1) according to the invention comprises at least one level sensor (6), associated with the shell (2). This level sensor (6) is provided to measure a level or height of the shell (2) with respect to the swath (C) and/or to measure the height of the swath (C) with respect to the ground. The level sensor (6), for example, is an ultrasonic sensor. By means of the signal of the level sensor (6), it is possible to adjust the height of the shell (2) and of the analysing sensor (5) to allow acquisition of the plant characteristics at different heights of the swath.

The level sensor (6) is preferably placed in the front portion (21) of the shell (2), in a position such as to be able perform its measurements before the passage of the shell (2) in the swath (C).

The device according to the invention is connected to a control module that receives the signals transmitted by the analysing sensor (5) and by the level sensor (6). Using the signal of the level sensor (6), the control module is able to adjust the working height of the shell (2) and of the analysing sensor (5), by activating and controlling the attachment means of the shell (2). Furthermore, by means of a calculation algorithm, the control module is capable of calculating the volume of the swath, based on the profile of the swath detected by the level sensor (6) and the length of the swath (C), which substantially corresponds to the movement completed by the shell (2) along the swath (C) itself.

Thanks to the signals received from the analysing sensor (5) and from the level sensor (6), the control module is thus able to map the characteristics of the swath (C) with great precision, substantially in every part thereof. Using a GPS module, the control module will be able to geolocate each measurement, making it possible to obtain a precise distribution of the qualitative values of the harvested hay and also the quantitative ones, thanks to the volume of the swath in different points on the ground.

As already pointed out previously, the analysing device (1) according to the present invention can be associated with an operating vehicle (10), schematically illustrated in figure 6.

The operating vehicle (10) comprises a machine (11) for producing bales of reaped plants, known in the art as a baler, which is provided with a plant harvesting or pick-up device (12). Essentially, the pick-up, conveyed forward by the operating vehicle, progressively gathers up the swath (C) and loads the plants into the baler (11), which forms the bales. The baler (11) is typically towed by the operating vehicle (10), but could also be in the form of an autonomous vehicle. Both the baler (11) and the pick-up (12) are well known in the art and thus it is not necessary to describe them in further detail.

In an innovative manner compared to current devices, the analysing device (1) according to the present invention is positioned upstream of the harvesting or pick-up device (12), with respect to the advancement direction (A). For this purpose it is possible to associate the device (1) with the operating vehicle (10), in a position such as to be able to reach a swath (C), or else it is possible to associate the device (1) with the baler (11) by means of a support that places it in front of the pick-up (12), so that the device (1) can enter into contact and analyse the swath (C) before it is gathered by the pick-up.

Positioning the analysing device (1) upstream of the pick-up (12) allows the characteristics of the plants (hay) to be detected and measured before loading into the baler (11) takes place. This, among other things, allows one to have direct control over the dosing of preservatives based on the actual measurement of the dry matter in the hay that is about to be loaded into the baler. Furthermore, the analysing device (1) positioned upstream of the pick-up (12) allows samples of hay that are such as to be representative of the entire bale to be measured in real time, without the need to conduct further sampling.

A further advantage offered by the analysing device (1) according to the present invention is that of being able to be adapted to any baler or operating vehicle by simply providing a support which allows the analysing device (1) to be positioned upstream of the pick-up with respect to the advancement direction along the swath.

## Claims

1. An analysing device for reaped and harvested plants in a heap or swath (C), **characterised in that** it comprises: a containment shell (2) provided with a tapered conformation from a rear portion (22) towards a front portion (21) that faces an advancement direction (A) with respect to a swath (C); an analysis window (4), fashioned through a wall of the shell (2); one or more analysing sensors (5), placed inside the shell (2) in a position such as to face towards the analysis window (4), for sensing the environment outside the shell (2) through the window (4) itself.

2. The device according to claim 1, wherein the front portion (21) has an apex (23) facing the advancement direction (A).

3. The device according to claim 1, wherein the apex (23) has a curved trend on a vertical plane, with concavity facing upwards.

4. The device according to claim 1, wherein the front portion (21) of the shell (2) is provided with a front tab (24), arranged on a median vertical plane of the shell (2).

5. The device according to claim 1, comprising at least one level sensor (6), associated with the shell (2) and provided to detect a level or height of the shell (2) with respect to the swath (C).

6. The device according to claim 1, wherein the shell (2) is provided with a means for the attachment to a chassis of an operating vehicle, said attachment means being provided to allow a movement of the shell (2) along a vertical direction and/or a rotation of the shell (2) about a horizontal axis and/or a movement of the shell (2) along a horizontal axis.

7. The device according to claim 1, wherein the analysing sensor (4) is an NIR type sensor.

8. An operating vehicle, comprising a machine (10) for the production of bales of reaped plants that is provided with a plant harvesting or pick-up device (12), **characterised in that** it comprises an analysing device (1) according to one of the preceding claims, arranged upstream of the harvesting or pick-up device with respect to the advancement direction (A).

9. A method for analysing reaped plants arranged in a heap or swath (C) comprising the following steps: arranging an analysing device (1) according to one of claims 1 to 7; positioning the analysing device at least partially inside the swath (C), at a predefined level with respect to the ground, so that the analysis window (4) is inside the swath (C); translating the analysing device (1) along an advancement direction (A) along the swath (C).

10. The method according to claim 9, comprising a step of varying the height or level of the shell (2), and therefore of the analysing sensor(s) (5), with respect to the ground, to allow information to be acquired at different heights of the swath (C).
